# EUROPÄISCHE PATENTSCHRIFT

(11) **EP 4 164 934 B1**
(45) Veröffentlichungstag und Bekanntmachung des Hinweises auf die Patenterteilung: **29.01.2025**
(21) Anmeldenummer: 21739588.8
(22) Anmeldetag: 25.06.2021
(51) Int. Cl.: B61D 23/02, B60R 3/02

(54) **SCHIENENFAHRZEUG MIT AUSFAHRBARER TRITTPLATTFORM**
RAIL VEHICLE COMPRISING AN EXTENDABLE STEP PLATFORM
VÉHICULE FERROVIAIRE COMPRENANT UNE MARCHE EXTENSIBLE

(30) Priorität: 13.07.2020 DE 102020208696
(43) Veröffentlichungstag der Anmeldung: 19.04.2023
(73) Patentinhaber: Siemens Mobility GmbH, 81739 München (DE)
(72) Erfinder: WITTENBERG, Thomas, 45359 Essen (DE)
(74) Vertreter: Siemens Patent Attorneys
(86) Internationale Anmeldenummer: PCT/EP2021/067483
(87) Internationale Veröffentlichungsnummer: WO 2022/012902

(56) Entgegenhaltungen:
- EP-A1- 2 998 182
- EP-B2- 2 358 576
- DE-A1- 102015 213 233
- US-A1- 2019 232 980
- US-B1- 6 481 037

## Beschreibung

Die Erfindung betrifft ein Schienenfahrzeug des Personenverkehrs umfassend einen Wagenkasten mit einem Einstiegsbereich mit wenigstens einer Einstiegstür und einer ausfahrbaren Trittplattform zur Überbrückung eines horizontalen Spalts zwischen dem Wagenkasten und einem ortsfesten Bahnsteig.

Schienenfahrzeuge mit Schiebetritten sind aus dem Stand der Technik in vielfältigen Formen bekannt. So offenbart beispielsweise die EP 1 792 801 A2 einen Schiebetritt mit einer unmittelbar unterhalb des Fußbodens ausschiebbaren Trittplattform zur im Wesentlichen stufenlosen Verlängerung des Fußbodens. Die WO 2012/100872 A1 hingegen lehrt einen Schiebetritt zum Einbau unterhalb einer Türöffnung in einer Seitenwand des Schienenfahrzeugs mit einer horizontal ausfahrbaren Trittanordnung mit mehreren Trittstufen. Die Druckschrift EP 2 998 182 A1 wiederum offenbart einen unterhalb einer Türöffnung vorgesehenen, ausfahrbaren Schiebetritt, zur Ausbildung einer Stufe zwischen dem ausgefahrenen Schiebetritt und dem Einstiegsbereich des Schienenfahrzeugs im Bereich der Türöffnung.

Die Offenlegungsschrift DE 10 2015 213233 A1 betrifft ein Schienenfahrzeug gemäß dem Oberbegriff des unabhängigen Patentanspruchs 1. Auch die Patentschrift US 6 481 037 B1 zeigt ein Schienenfahrzeug gemäß dem Oberbegriff des unabhängigen Patentanspruchs 1.

Der Erfindung liegt die Aufgabe zugrunde, ein Schienenfahrzeug mit einer einfachen, ausfahrbaren Trittplattform anzugeben.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug des Personenverkehrs umfasst wenigstens einen Wagenkasten mit wenigstens einer Einstiegstür in einem Einstiegsbereich des Wagenkastens des Schienenfahrzeugs und einer ausfahrbaren Trittplattform zur Überbrückung eines horizontalen Spalts zwischen dem Wagenkasten des Schienenfahrzeugs und einem ortsfesten Bahnsteig, wobei das Schienenfahrzeug im Einstiegsbereich eine fest mit dem Wagenkasten verbundene, unbewegliche Trittleiste aufweist, die über eine Außenhülle des Wagenkastens des Schienenfahrzeugs hinaus ragt, wobei die ausfahrbare Trittplattform ausgebildet und unterhalb der Trittleiste derart angeordnet ist, dass eine Stufe vorgegebener Höhe zwischen der ausfahrbaren Trittplattform in einer ausgefahrenen Stellung und der Trittleiste ausgebildet ist.

Die Einstiegstür ist geeignet, eine Türöffnung in einer Außenhülle des Schienenfahrzeugs in geschlossener Stellung zu verschließen und in geöffneter Stellung zum Einstieg in und zum Ausstieg aus dem Fahrzeug für Passagiere freizugeben. Die Einstiegstür kann daher auch Außentür genannt werden. Sie ist insbesondere seitlich am Schienenfahrzeug angeordnet.

Der Bereich im Schienenfahrzeug hinter der Türöffnung der Einstiegstür wird allgemein als Einstiegsbereich bezeichnet. Der Einstiegsbereich wird hier durch die Trittleiste nach außen verlängert.

Die Trittleiste weist dabei eine feste, vorgegebene Höhe über den Schienen, insbesondere derer Laufflächen, des Schienenfahrzeugs auf. Die Trittleiste ist am Wagenkasten, insbesondere einer Rohbaustruktur des Wagenkastens, ortsfest angeordnet und mit ihr fest verbunden. Dies bedeutet in diesem Zusammenhang nicht zwingend eine stoffschlüssige Verbindung zwischen Trittleiste und Wagenkasten, welche jedoch vorteilhaft sein kann, - die Trittleiste kann auch lösbar mit dem Wagenkasten verbunden sein - sondern vielmehr, dass die Trittleiste zum Wagenkasten bzw. Rohbau im Betrieb des Fahrzeugs unbeweglich ist.

Gemäß einer Weiterbildung der erfindungsgemäßen Lösung ist die Trittleiste derart angeordnet, dass sie an einen Fußboden des Schienenfahrzeugs im Einstiegsbereich stößt. Vorteilhaft schließt sie im Wesentlichen spaltfrei, insbesondere bündig, an diesen an. Die Trittleiste verlängert somit den Fußboden im Einstiegsbereich des Schienenfahrzeugs, insbesondere über die Außenhülle des Fahrzeugs hinaus.

Die Trittleiste bildet eine Einstiegskante des Schienenfahrzeugs im Einstiegsbereich und schließt somit den Einstiegsbereich des Schienenfahrzeugs zu einem Bahnsteig hin ab.

Dabei weist die Trittleiste in einem nach Außen gerichteten Bereich ein im Querschnitt L-förmiges Profil auf. Ein im Wesentlichen horizontal verlaufender, vom Innenraum des Fahrzeugs im Einstiegsbereich weg weisender Abschnitt des L-förmigen Bereichs der Trittleiste dient dabei als Trittbereich für Personen. Er ist entsprechend zum Auftreten ausgestaltet und ragt über die Außenhülle des Wagenkastens hinaus. Ein im Wesentlichen vertikal verlaufender Abschnitt des L-förmigen Bereichs der Trittleiste hingegen ist zur Anlage der Einstiegstür in ihrer geschlossenen Stellung ausgebildet. Er kann sowohl als Anschlag als auch zur Abdichtung der geschlossenen Einstiegstür gegenüber dem Wagenkasten wirken.

Die Einstiegskante des Wagenkastens des Schienenfahrzeugs im Einstiegsbereich wird bei der L-förmigen Trittleiste durch eine obere Kante des vertikalen Abschnitts geformt. Von dieser Einstiegskante ausgehend verläuft die Trittleiste zum Inneren des Wagenkastens hin insbesondere in Verlängerung zum Fußboden im Einstiegsbereich des Wagenkastens des Schienenfahrzeugs und stößt insbesondere bündig an diesen an. Nach Außen bildet die Einstiegskante den Abschluss des Einstiegsbereich des Wagenkastens des Schienenfahrzeugs.

Durch das L-förmige Profil ist die Trittleiste in dem nach Außen gerichteten, vorderen Bereich stufenförmig ausgebildet. Sie könnte somit auch als Trittstufe bezeichnet werden. Die Stufenhöhe ist dabei aber vergleichsweise klein, insbesondere beträgt die Höhe des vertikalen Abschnitts von der Einstiegskante bis zum horizontalen Abschnitt der Trittleiste weniger als 5 cm, so dass die primäre Wirkung des im Querschnitt L-förmigen Trittleistenprofils in der Anlage der Einstiegstür und deren Abdichtung zum Wagenkasten sowie in der Verringerung eines horizontalen Spalts zwischen dem Einstiegsbereich und seiner Einstiegskante und dem ortsfesten Bahnsteig begründet ist und weniger in einer Ausbildung einer weiteren Stufe zur Verkleinerung eines vertikalen Abstands zwischen der Einstiegskante und dem Bahnsteig.

Im Querschnitt durch die gesamte Trittleiste kann diese auch ein doppel-L-förmiges Profil, gelegentlich auch als Z-Profil bezeichnet, aufweisen. Sie ist dann zweifach abgekantet. Allgemein steht die Schnittebene eines Querschnitts durch die Trittleiste senkrecht zu einer Längsrichtung des Wagenkastens des Schienenfahrzeugs.

Die ausfahrbare Trittplattform ist weitergebildet zwischen einer eingefahrenen Stellung und einer vollständig ausgefahrenen Stellung in Abhängigkeit des horizontalen Spalts zwischen dem Wagenkasten und einem ortsfesten Bahnsteig ausfahrbar ausgebildet.

Sie schließt weitergebildet in einer eingefahrenen Stellung bündig der Außenhülle des Wagenkastens des Schienenfahrzeugs ab. Die Außenhülle wird gelegentlich auch als Außenhaut bezeichnet.

Die ausfahrbare Trittplattform ist insbesondere unterhalb der Trittleiste angeordnet, insbesondere derart, dass in einer ausgefahrenen Stellung der Trittplattform eine Stufe vorgegebener Höhe zwischen der festen Trittleiste und der ausfahrbaren Trittplattform in der ausgefahrenen Stellung ausgebildet ist. Die Trittplattform weist in der ausgefahrenen Stellung also einen vorgegebenen Abstand in vertikaler Richtung zur Trittleiste auf.

In der ausgefahrenen Stellung der ausfahrbaren Trittplattform bildet diese eine Stufe vorgegebener Höhe mit der Trittleiste aus, wobei sie über die Außenhülle des Fahrzeugs hinausragt. In der eingefahrenen Stellung hingegen gemäß der Weiterbildung liegt sie vollständig innerhalb der Außenhülle des Fahrzeugs. Die ausfahrbare Trittplattform ist in der eingefahrenen Stellung vollständig in einen Unterbau des Wagenkastens integriert. Die ausfahrbare Trittplattform wird insbesondere aus- und eingeschoben und ist damit linear ausfahrbar ausgebildet. Sie kann auch als Schiebetritt oder als sogenannter Einlegetritt bezeichnet werden.

Dabei kann die ausfahrbare Trittplattform ausschließlich linear, insbesondere im Wesentlichen in horizontaler Richtung, ausfahrbar und frei von Schwenk- oder Knickgelenken ausgebildet sein. Die Trittplattform als solche ist insbesondere eben ausgebildet. Neben einer ausschließlich horizontalen Ausfahrbarkeit kann die Trittplattform auch mit vertikalem Richtungsanteil in einem festen Winkel kleiner 5°, beispielsweise von ca. 2° zu einer Horizontalebene ausfahrbar ausgebildet sein. In der ausgefahrenen Stellung ist sie also leicht schräg angeordnet. Dennoch weist sie in der vollständig ausgefahrenen Stellung einen vorgegebenen, festen Abstand in vertikaler Richtung zur Trittleiste sowie zum, insbesondere unbeweglichen, am Wagenkasten fest angeordneten Fußboden des Schienenfahrzeugs im Einstiegsbereich auf.

Weitergebildet ist die ausfahrbare Trittplattform zwischen einer eingefahrenen Stellung und einer vollständig ausgefahrenen Stellung in Abhängigkeit des horizontalen Spalts zwischen dem Wagenkasten und einem ortsfesten Bahnsteig ausfahrbar ausgebildet. Sie ist somit variabel ausfahrbar und im horizontalen Abstand ihrer zum Bahnsteig weisenden Stirnseite zur Einstiegskante des Schienenfahrzeugs verstellbar.

Gemäß einer weiteren Weiterbildung ist das Schienenfahrzeug derart ausgebildet, dass die vollständig ausgefahrene Trittplattform auch in horizontaler Richtung einen vorgegebenen Abstand größer Null zur Trittleiste aufweist. Um eine Stufe auszubilden ist die Trittleiste somit zur vollständig ausgefahrenen Trittplattform in Richtung des Wagenkastens des Schienenfahrzeugs versetzt angeordnet ist. Die vollständig ausgefahrene Trittplattform überragt die Außenhülle des Schienenfahrzeugs weiter als die Trittleiste.

Die Trittleiste ragt grundsätzlich nicht über eine vorgegebene Hüllkurve des Fahrzeugs hinaus - sie liegt vollständig innerhalb dieser Hüllkurve. Sie dient lediglich der Verringerung des Spalts zwischen Einstiegsbereich des Schienenfahrzeugs und des Bahnsteigs. Insbesondere ragt sie nur wenige Zentimeter über die Außenhülle hinaus. Beispielsweise beträgt der Abstand einer Vorderkante der Trittleiste zur Einstiegskante weniger als 10 cm.

Die Trittplattform hingegen kann so ausgestaltet sein, dass sie in vollständig ausgefahrener Stellung die vorgegebene Hüllkurve überragt. Ihr Abstand in vollständig ausgefahrener Stellung kann in horizontaler Richtung zur Einstiegskante beispielsweise 20 cm bis 30 cm betragen. Wie oben bereits ausgeführt, kann sie bei geringeren Abständen zum Bahnsteig auch nur um ein geringeres Maß zur Spaltüberbrückung ausgefahren werden.

Der vertikale Abstand - und damit die Stufenhöhe - zwischen der ausgefahrenen Trittplattform und der Einstiegskante im Einstiegsbereich des Wagenkastens des Schienenfahrzeugs entspricht den Vorgaben der TSI (Technische Spezifikationen für die Interoperabilität im Europäischen Wirtschaftsraum) oder vergleichbaren Normen.

Bei dem Schienenfahrzeug handelt es sich vorteilhaft um ein Doppelstock-Schienenfahrzeug. Der Einstiegsbereich ist dann in einem unteren Stockwerk des doppelstöckig ausgebildeten Schienenfahrzeugs angeordnet.

Eine weitere Weiterbildung ist darin zu sehen, dass das, insbesondere doppelstöckige, Schienenfahrzeug mehrere, insbesondere wenigstens drei, miteinander gekoppelte Wagenkästen aufweist, wobei der erfindungsgemäße Wagenkasten zwischen zwei Wagenkästen angeordnet ist, die jeweils frei sind von einer fest mit dem Wagenkasten verbundenen, unbeweglichen Trittleiste, die über die Außenhülle des Wagenkastens hinaus ragt und von einer ausfahrbaren Trittplattform unterhalb der Trittleiste, die derart angeordnet ist, dass eine Stufe zwischen der ausgefahrenen Trittplattform und der Trittleiste ausgebildet ist. Die beschriebene Trittanordnung mit der Trittleiste und der ausfahrbaren Trittplattform somit ausschließlich in einem oder mehreren Mittelwagen vom Doppelstockfahrzeug vorgesehen.

Gemäß einer weiteren Weiterbildung des erfindungsgemäßen Schienenfahrzeug weist es eine Bürste auf, welche im Bereich der Außenhülle oberhalb der ausfahrbaren Trittplattform angeordnet und zum Abstreifen von Gegenständen von der ausfahrbaren Trittplattform beim Aus- und/oder Einfahren der ausfahrbaren Trittplattform geeignet ausgebildet und zur ausfahrbaren Trittplattform ausgerichtet ist. Die Bürste kann dabei in eine Blende der Außenhülle integriert sein.

Die Erfindung lässt zahlreiche Ausführungsformen zu. Sie wird anhand der nachfolgenden Figur näher erläutert, in welcher ein Ausgestaltungsbeispiel dargestellt ist.

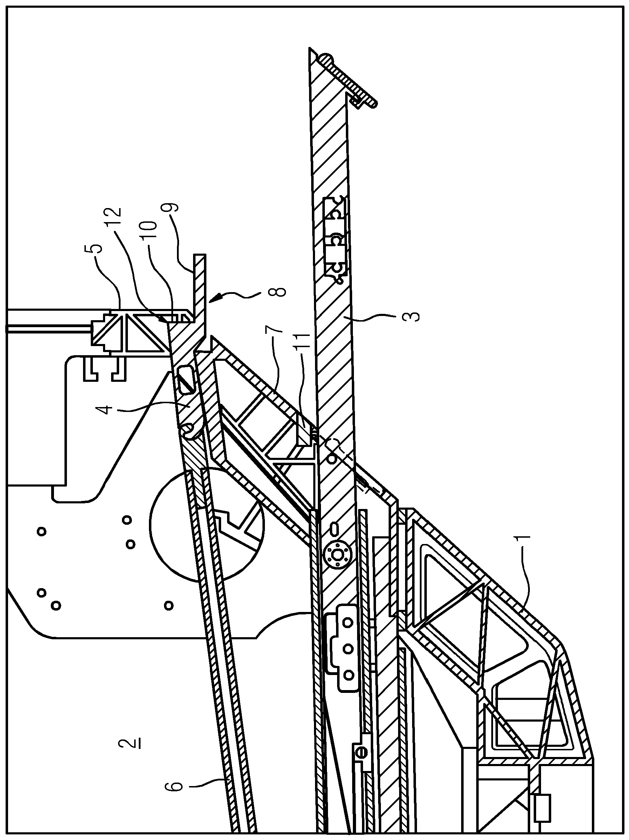

Die Figur zeigt den schematischen Querschnitt durch einen Einstiegsbereich 2 eines Wagenkastens 1 eines erfindungsgemäßen Schienenfahrzeugs.

Im Einstiegsbereich 2 ist ein schräg zur Mitte des Wagenkastens 1 absteigenden Fußboden 6 sowie eine bündig an diesen anstoßenden und den Einstiegsbereich 2 nach außen hin abschließende Trittleiste 4 angeordnet. Die Trittleiste 4 ist unbeweglich und fest mit dem Wagenkasten 1 verbunden. Hier ist sie Z-förmig ausgebildet mit einem nach Außen gerichteten L-förmigen Bereich 8, welcher eine Stufe ausbildet.

Der L-förmige Bereich 8 Trittleiste 4 weist dabei einen horizontal verlaufenden Abschnitt 9 und einen vertikal verlaufender Abschnitt 10 auf. Der vertikale Abschnitt 10 dient zur Anlage der Einstiegstür 5 in ihrer geschlossenen Stellung, wie hier skizziert, in welcher diese den Einstiegsbereich 2 des Wagenkastens 1 des Schienenfahrzeugs zur Umwelt hin - in diesem Ausführungsbeispiel bündig mit einer Außenhülle 7 des Wagenkastens 1 des Schienenfahrzeugs verlaufend - verschließt.

Der horizontale Abschnitt 9 ragt über eine Außenhülle 7 des Wagenkastens 1 hinaus und kann von Fahrgästen oder Personen im Allgemeinen gefahrlos betreten werden. Er dient zur Verringerung eines horizontalen Spalts zwischen dem Einstiegsbereich 2 und einem nicht dargestellten, ortsfesten Bahnsteig.

Eine obere Kante des vertikalen Abschnitts der L-förmigen Trittleiste 4 bildet eine Einstiegskante 12 des Wagenkastens 1 des Schienenfahrzeugs im Einstiegsbereich 3 und schließt somit den Einstiegsbereich 3 zum Bahnsteig hin ab.

Neben der Trittleiste 4 umfasst das Schienenfahrzeug eine unterhalb des Einstiegsbereichs 2 angeordnete, ausfahrbare Trittplattform 3 zur Überbrückung des horizontalen Spalts zwischen dem Wagenkasten 1 und dem ortsfesten Bahnsteig.

Die ausfahrbare Trittplattform 3 ist dabei derart unterhalb der Trittleiste 4, dass eine Stufe zwischen der ausgefahrenen Trittplattform 3 und der Trittleiste 4 ausgebildet ist.

Veranschaulicht ist eine teilweise ausgefahrene Trittplattform 3 zwischen einer eingefahrenen und einer vollständig ausgefahrenen Stellung. Die Trittplattform 3 ist rein linear ausfahrbar. Hier verläuft sie bauartbedingt leicht schräg zum Bahnsteig hin ansteigend. Sie könnte aber auch zum Bahnsteig geneigt sein oder horizontal verlaufen. Darüber hinaus ist ihre Trittfläche eben ausgebildet. In ihrer eingefahrenen Stellung ist die ausfahrbare Trittplattform 3 nicht nur vollständig in einen Unterbau des Wagenkastens 1 integriert, sondern sie schließt auch bündig mit der Außenhülle 7 des Wagenkastens 1 des Schienenfahrzeugs ab. Zur Vermeidung einer Eintragung von Schmutz weist der Wagenkasten 1 eine Blende mit integrierter Bürste 11 als Teil der Außenhülle 7 auf, welche Bürste zur Trittfläche der Trittplattform 3 wirkend ausgerichtet ist.

In ihrer ausgefahrenen Stellung weist die Trittplattform 3 einen vorgegebenen, festen Abstand in vertikaler Richtung zur Trittleiste 4, insbesondere zur Einstiegskante 12 auf.

In vollständig ausgefahrener Stellung ragt die Trittplattform 3 zudem weit über die Außenhülle 7 hinaus und überragt auch die Trittleiste 4 um ein vorgegebenes Maß in horizontaler Richtung zur Ausbildung einer Stufe. Die Trittleiste 4 ist entsprechend nach hinten versetzt angeordnet.

Das Schienenfahrzeug ist doppelstöckig ausgebildet und der Einstiegsbereich 2 ist im unteren Stockwerk des doppelstöckigen Schienenfahrzeugs angeordnet.

## Patentansprüche

1. Schienenfahrzeug des Personenverkehrs umfassend einen Wagenkasten (1) mit wenigstens einer Einstiegstür (5) in einem Einstiegsbereich (2) und einer ausfahrbaren Trittplattform (3) zur Überbrückung eines horizontalen Spalts zwischen dem Wagenkasten und einem ortsfesten Bahnsteig, wobei es im Einstiegsbereich (2) eine fest mit dem Wagenkasten (1) verbundene, unbewegliche Trittleiste (4) aufweist, die über eine Außenhülle (6) des Wagenkastens (1) hinaus ragt, **dadurch gekennzeichnet, dass** die ausfahrbare Trittplattform (3) unterhalb der Trittleiste (4) derart angeordnet ist, dass eine Stufe zwischen der ausgefahrenen Trittplattform (3) und der Trittleiste (4) ausgebildet ist, wobei die Trittleiste (4) in einem nach Außen gerichteten Bereich ein L-förmiges Profil aufweist, wobei ein im Wesentlichen horizontaler Abschnitt (9) des L-förmigen Profils zum Auftreten ausgebildet ist und zumindest teilweise über die Außenhülle (7) des Wagenkastens (1) hinaus ragt und wobei ein im Wesentlichen vertikaler Abschnitt (10) des L-förmigen Profils zur Anlage der Einstiegstür (5) in einer geschlossenen Stellung ausgebildet ist.

2. Schienenfahrzeug nach Anspruch 1, **dadurch gekennzeichnet, dass** das Schienenfahrzeug doppelstöckig ist und der Einstiegsbereich (2) in einem unteren Stockwerk angeordnet ist.

3. Schienenfahrzeug nach einem der Ansprüche 1 oder 2,
**dadurch gekennzeichnet, dass** die ausfahrbare Trittplattform (3) linear ausfahrbar ausgebildet und derart angeordnet ist, dass sie in einer ausgefahrenen Stellung einen vorgegebenen, festen Abstand in vertikaler Richtung zur Trittleiste (4) aufweist.

4. Schienenfahrzeug nach einem der Ansprüche 1 bis 3,
**dadurch gekennzeichnet, dass** die ausfahrbare Trittplattform (3) zwischen einer eingefahrenen Stellung und einer vollständig ausgefahrenen Stellung in Abhängigkeit des horizontalen Spalts zwischen dem Wagenkasten (1) und einem ortsfesten Bahnsteig ausfahrbar ausgebildet ist.

5. Schienenfahrzeug nach einem der Ansprüche 1 bis 4,
**dadurch gekennzeichnet, dass** die ausfahrbare Trittplattform (3) derart ausgebildet ist, dass sie in einer eingefahrenen Stellung bündig mit einer Außenhülle (7) des Wagenkastens des Schienenfahrzeugs abschließt.

6. Schienenfahrzeug nach einem der Ansprüche 1 bis 5,
**dadurch gekennzeichnet, dass** die Trittleiste (4) zur vollständig ausgefahrenen Trittplattform (3) in Richtung des Wagenkastens (1) des Schienenfahrzeugs hin versetzt angeordnet ist, um eine Stufe auszubilden.

7. Schienenfahrzeug nach einem der Ansprüche 1 bis 6,
**dadurch gekennzeichnet, dass** die Trittleiste (4) an einen Fußboden (6) im Einstiegsbereich (2) stößt.

8. Schienenfahrzeug nach einem der Ansprüche 1 bis 7,
**dadurch gekennzeichnet, dass** es eine Bürste (11) aufweist, welche im Bereich der Außenhülle (7) oberhalb der ausfahrbaren Trittplattform (3) angeordnet und zur Reinigung der ausfahrbaren Trittplattform (3) beim Aus- und/oder Einfahren der ausfahrbaren Trittplattform (3) geeignet ausgebildet und zur ausfahrbaren Trittplattform (3) ausgerichtet ist.

## Claims

1. Rail vehicle for passenger transport comprising a carriage (1) with at least one door (5) in a passenger entrance/exit area (2) and an extendable step platform (3) for bridging a horizontal gap between the carriage and a stationary platform, wherein in the passenger entrance/exit area (2) it has an immobile stepping strip (4) which is fixedly connected to the carriage (1) and projects beyond an outer shell (6) of the carriage (1), **characterised in that** the extendable step platform (3) is arranged below the stepping strip (4) in such a way that a step is embodied between the extended step platform (3) and the stepping strip (4), wherein the stepping strip (4) has an L-shaped profile in an outwardly directed region, wherein a substantially horizontal section (9) of the L-shaped profile is embodied for stepping purposes and projects at least partially beyond the outer shell (7) of the carriage (1) and wherein a substantially vertical section (10) of the L-shaped profile is embodied to rest against the door (5) in a closed position.

2. Rail vehicle according to claim 1, **characterised in that** the rail vehicle has two levels and the passenger entrance/exit area (2) is arranged in a lower level.

3. Rail vehicle according to one of claims 1 or 2, **characterised in that** the extendable step platform (3) is embodied to be linearly extendable and is arranged in such a way that in an extended position it has a predetermined, fixed distance in the vertical direction with respect to the stepping strip (4).

4. Rail vehicle according to one of claims 1 to 3, **characterised in that** the extendable step platform (3) is embodied to be extendable between a retracted position and a completely extended position as a function of the horizontal gap between the carriage (1) and a stationary platform.

5. Rail vehicle according to one of claims 1 to 4, **characterised in that** the extendable step platform (3) is embodied such that in a retracted position it is flush with an outer shell (7) of the carriage of the rail vehicle.

6. Rail vehicle according to one of claims 1 to 5, **characterised in that** with respect to the completely extended step platform (3) the stepping strip (4) is arranged offset in the direction of the carriage (1) of the rail vehicle in order to embody a step.

7. Rail vehicle according to one of claims 1 to 6, **characterised in that** the step strip (4) abuts a floor (6) in the passenger entrance/exit area (2).

8. Rail vehicle according to one of claims 1 to 7, **characterised in that** it has a brush (11), which is arranged in the region of the outer shell (7) above the extendable step platform (3) and is embodied to clean the extendable step platform (3) when extending and/or retracting the extendable step platform (3) and is aligned with respect to the extendable step platform (3).

## Revendications

1. Véhicule ferroviaire du transport des personnes comprenant une caisse (1) ayant au moins une porte (5) d'accès dans une partie (2) d'accès et une plateforme (3) de marche déployable pour faire un pont sur un intervalle horizontal entre la caisse et un quai fixe, dans lequel il a, dans la partie (2) d'accès, un marchepied (4) immobile, assemblé de manière fixe à la caisse (1), qui dépasse d'une enveloppe (6) extérieure de la caisse (1), **caractérisé en ce que** la plateforme (3) de marche déployable est disposée en-dessous du marchepied (4), de manière à former un palier entre la plateforme (3) de marche déployée et le marchepied (4), dans lequel le marchepied (4) a, dans une partie dirigée vers l'extérieur, un profil en forme de L, dans lequel une partie (9) sensiblement horizontale du profil en forme de L, est constituée pour la marche et dépasse au moins en partie de l'enveloppe (7) extérieure de la caisse (1), et dans lequel une partie (10) sensiblement verticale du profil en forme de L est constituée pour venir s'appliquer à la porte (5) d'accès dans une position fermée.

2. Véhicule ferroviaire suivant la revendication 1, **caractérisé en ce que** le véhicule ferroviaire est à double étage et la partie (2) d'accès est dans un étage inférieur.

3. Véhicule ferroviaire suivant l'une des revendications 1 ou 2, **caractérisé en ce que** la plateforme (3) de marche déployable est constituée, de manière à pouvoir se déployer linéairement et est montée de manière à avoir, dans une position déployée, une distance fixe donnée à l'avance dans la direction verticale au marchepied (4).

4. Véhicule ferroviaire suivant l'une des revendications 1 à 3, **caractérisé en ce que** la plateforme (3) de marche déployable est constituée de manière déployable entre une position escamotée et une position déployée complètement, en fonction de l'intervalle horizontal entre la caisse (1) et un quai fixe.

5. Véhicule ferroviaire suivant l'une des revendications 1 à 4, **caractérisé en ce que** la plateforme (3) de marche déployable est constituée de manière à venir au ras d'une enveloppe (7) extérieure de la caisse du véhicule ferroviaire.

6. Véhicule ferroviaire suivant l'une des revendications 1 à 5, **caractérisé en ce que** le marchepied (4) est, par rapport à la plateforme (3) de marche déployée complètement, disposé de manière décalée dans la direction de la caisse (1) du véhicule ferroviaire pour constituer un palier.

7. Véhicule ferroviaire suivant l'une des revendications 1 à 6, **caractérisé en ce que** le marchepied (4) bute sur un plancher (6) dans la partie (2) d'accès.

8. Véhicule ferroviaire suivant l'une des revendications 1 à 7, **caractérisé en ce qu'**il a une brosse (11), qui est disposée dans la partie de l'enveloppe (7) extérieure au-dessus de la plateforme (3) de marche déployable et qui est constituée de manière appropriée au nettoyage de la plateforme (3) de marche déployable, lors du déploiement et/ou de l'escamotage de la plateforme (3) de marche déployable, et est orientée par rapport à la plateforme (3) de marche déployable.
